(19) Europäisches Patentamt
European Patent Office
Office européen des brevets

(11) Veröffentlichungsnummer: **0 412 342 A2**

# (12) EUROPÄISCHE PATENTANMELDUNG

(21) Anmeldenummer: **90114006.1**

(22) Anmeldetag: **21.07.90**

(51) Int. Cl.5: **C01B 6/00**, C07B 35/02, C01B 33/107, C01B 33/04, C01B 25/06, C01B 21/087

(30) Priorität: **11.08.89 DE 3926595**

(43) Veröffentlichungstag der Anmeldung: **13.02.91 Patentblatt 91/07**

(84) Benannte Vertragsstaaten: **AT BE CH DE DK ES FR GB IT LI LU NL SE**

(71) Anmelder: **Degussa Aktiengesellschaft**
**Weissfrauenstrasse 9**
**W-6000 Frankfurt am Main 1(DE)**

(72) Erfinder: **Klockner, Hans-Jürgen, Dr.**
**Grünaustrasse 19**
**D-6450 Hanau 9(DE)**
Erfinder: **Schmoll, Ralf, Dr.**
**Erfurter Strasse 53**
**D-6500 Mainz(DE)**
Erfinder: **Panster, Peter, Dr.**
**Im Lochseif 8**
**D-6458 Rodenbach(DE)**
Erfinder: **Kleinschmit, Peter, Dr.**
**Wildaustrasse 19**
**D-6450 Hanau 9(DE)**

## (54) Verfahren zur Hydrierung halogensubstituierter Verbindungen.

(57) Die Erfindung betrifft ein Verfahren zur Hydrierung halogensubstituierter Verbindungen von Elementen der 2. bis 4. Periode der Gruppen III bis V des Periodensystems mit Ausnahme von Gallium, Aluminium, Kohlenstoff, Stickstoff, das dadurch gekennzeichnet ist, daß man

a) einer Salzschmelze, bestehend aus 50 bis 67 Mol% $AlCl_3$ (wasserfrei) und 50 bis 33 Mol% Natriumchlorid feinteiliges Aluminium zusetzt,

b) in die gerührte oder auf andere Weise dispergierte Suspension Wasserstoff einleitet,um das feinverteilte Aluminium zu hydrieren,

c) anschließend die so entstandene Mischung mit der halogensubstituierten Verbindung umsetzt und

d) die hydrierte Verbindung isoliert.

EP 0 412 342 A2

## VERFAHREN ZUR HYDRIERUNG HALOGENSUBSTITUIERTER VERBINDUNGEN

Die Erfindung betrifft ein Verfahren zur Hydrierung halogensubstituierter Verbindungen von Elementen der 2. bis 4. Periode der Gruppen III bis V des Periodensystems mit Ausnahme von Gallium, Kohlenstoff, Aluminium und Stickstoff.

Zur Synthese der kovalenten Hydride der Elemente Silicium, Germanium und Bor ist die Umsetzung der entsprechenden Halogenide mit den ionischen Hydriden der Alkali- und Erdalkalimetalle in Salzschmelzen beschrieben worden

((1) DE-PS 10 80 077, (2) W. Sundermeyer, O. Glemser, Angew. Chemie 70 (1958) 625, (3) H.-H. Emons et al., Z. Chem. 23 (1983) 349).

Bei der Auswahl der Komponenten der Salzschmelzen ist zum einen darauf zu achten, daß die Salzschmelzen nicht durch die eingesetzten Hydride der Alkali- und Erdalkalimetalle reduziert werden. Des weiteren werden die bei der Durchführung der Reaktion angewendeten Temperaturen nach oben begrenzt durch die beginnende thermische Zersetzung der Hydride von Bor, Silicium und Germanium. So beginnt die thermische Zersetzung für Monosilan bei 400 °C und für German bei 280 °C.

Betrachtet man unter diesen Einschränkungen die möglichen Kombinationen von Salzen, deren Komponenten gegen Alkali-und Erdalkalimetallhydride stabil sind und deren Eutektikum bei maximal 350 ° C liegt, so zeigt sich, daß nur lithiumchloridhaltige Salzgemische diesen Anforderungen genügen.

Die Verwendung einer LiCl-haltigen Salzschmelze hat folgenden Nachteil:

Da sich im Verlaufe der Umsetzung des Alkali- oder Erdalkalimetallhydrids mit den Halogeniden von Silicium, Germanium oder Bor usw. zu den entsprechenden Wasserstoffverbindungen durch gleichzeitige Bildung der Halogenide der Alkali- oder Erdalkalimetalle die Zusammensetzung der Salzschmelze verändert, ist die zusätzliche Zugabe von einzelnen Komponenten der Schmelze nötig,um deren Zusammensetzung konstant zu halten. Dies führt zu einer entsprechenden Volumenzunahme der Schmelze, so daß -um eine überfüllung des Reaktors zu vermeidenständig oder von Zeit zu Zeit ein Teil der Schmelze abgelassen werden muß.

Der hohe Wert des LiCl in dem Abfallsatz macht dann eine teure und aufwendige Aufarbeitung notwendig.

H.L. Jackson et al. (Inorg. Chem. 2 (1963) 43) beschreiben ein Verfahren, bei dem Siliciumtetrachlorid und Dimethyldichlorsilan in einer eutektischen NaCl-$AlCl_3$-Schmelze in Gegenwart von Aluminium unter extrem hohen Drucken (mehrere hundert bar) und langen Reaktionszeiten mit Wasserstoff zu Silan umgesetzt werden.

Angaben über Ausbeuten sind in dieser Veröffentlichung nicht enthalten, es heißt aber, daß sich z. B. mit Dimethyldichlorsilan nur geringe Umsätze erzielen lassen.

Aufgabe der Erfindung ist, ein Verfahren zu finden, bei dem man unter Atmosphärendruck halogensubstituierte Verbindungen verschiedener Elemente mit hohen Ausbeuten in Salzschmelzen hydrieren kann, die kein Lithiumchlorid enthalten.

Gegenstand der Erfindung ist ein Verfahren zur Hydrierung halogensubstituierter Verbindungen von Elementen der 2. bis 4. Periode der Gruppen III bis V des Periodensystems mit Ausnahme von Gallium, Aluminium, Kohlenstoff, Stickstoff, das dadurch gekennzeichnet ist, daß man

a) einer Salzschmelze, bestehend aus 50 bis 67 Mol% $AlCl_3$ 3 (wasserfrei) und 50 bis 33 Mol% Natriumchlorid, feinteiliges Aluminium zusetzt,

b) in die gerührte oder auf andere Weise aufgewirbelte Suspension Wasserstoff einleitet, um das feinverteilte Aluminium zu hydrieren,

c) anschließend die so entstandene Mischung mit der halogensubstituierten Verbindung umsetzt und

d) die hydrierte Verbindung isoliert.

Die Umsetzung läuft nach dem folgenden Schema ab (z. B. mit $SiCl_4$):

$$n\ Al + (3-n)\ AlCl_3 + \frac{3n}{2}\ H_2 \overset{T}{\rightleftharpoons} 3\ AlH_nCl_{3-n} \qquad (1)$$

$$4\ AlH_nCl_{3-n} + n\ SiCl_4 \xrightarrow[NaAlCl_4]{T} n\ SiH_4 + 4\ AlCl_3 \qquad (2)$$

Gesamtbilanz:

$$4\ Al + 6\ H_2 + 3\ SiCl_4 \rightarrow 3\ SiH_4 + 4 AlCl_3 \qquad (3)$$

Die geeigneten Konzentrationsverhältnisse von Natriumchlorid und $AlCl_3$ in der Schmelze sind durch das Phasendiagramm vorgegeben.

Enthält das Gemisch mehr als 50 Mol% Natriumchlorid, liegt dieses in fester Form suspendiert in der Schmelze vor.

$AlCl_3$ in einer Menge von mehr als 67 Mol% in der Schmelze führt wegen der Sublimationsneigung dieser Verbindung zu Problemen, was jedoch an der prinzipellen Durchführbarkeit des Verfahrens nichts ändert. Das zuerst in Form einer Suspension vorliegende Aluminiumpulver setzt sich mit Wasserstoff entsprechend der Gleichung (1) um.

Die gewünschte Hydrierung von Verbindungen gemäß Formel (1) wird durch eventuell im überschuß vorliegendes, supendiertes Aluminiumpulver im allgemeinen nicht gestört.

Da in der Gesamtbilanz nach Gleichung (3) im Reaktionsverlauf zusätzliches $AlCl_3$ gebildet wird, muß zur Aufrechterhaltung des gewünschten $NaCl/AlCl_3$-Molverhältnisses weiteres NaCl zugesetzt werden.

Überraschenderweise läuft das Verfahren mit hohem Umsatz unter Normaldruck ab.

Eine Umsetzung zum gewünschten Endprodukt ist natürlich auch bei erhöhten Drucken möglich, erfordert aber einen erheblich höheren Aufwand wegen der dann notwendigen Druckapparaturen.

Die Partikelgröße des der $AlCl_3$-Schmelze zugesetzten Aluminiums ist nicht kritsch. Bevorzugt wird jedoch ein feinteiliges Pulver mit einer Korngrößenverteilung von 32 bis 150 $\mu$m.

Bevorzugt setzt man Aluminium ein, welches 0,03 bis 0,25 Gew.-%, insbesondere 0,1 bis 0,2 %, mindestens eines wasserstoffübertragenden Metalls enthält, bezogen auf Aluminium. Dabei handelt es sich vor allem um Titan, Zirkon, Hafnium, Vanadin, Niob oder Nickel, inbesondere Titan. Als besonders geeignet, erweist sich unter Inertgas verdüstes Aluminium. Auch durch Schmelzflußelektrolyse abgeschiedenes Aluminiumpulver ist verwendbar.

Die Beladung der $AlCl_3$-NaCl-Schmelze mit Wasserstoff erfolgt bevorzugt so lange, bis kein weiterer Wasserstoff mehr absorbiert wird, bzw. bis das zugesetzte Aluminiumpulver weitgehend aufgelöst ist.

Ist das Aluminium nicht mit wasserstoffübertragendem Metall legiert, setzt man der Schmelze vor dem Einleiten des Wasserstoffs (Schritt (b)) bevorzugt 0,1 bis 0,5 Gew.-%, bezogen auf die Menge Aluminium, eines Hydrids, insbesondere NaH, $TiH_2$ oder $LiAlH_4$ zu.

Man setzt der Schmelze im allgemeinen soviel Aluminium zu, daß die hydrierende Verbindung, $AlH_ncl_{3-n}$, einen Gehalt von 0,01 bis 10 Mol%, bezogen auf die Molsumme von $AlCl_3$ und NaCl, besitzt.

Mit Hilfe des erfindungsgemäßen Verfahrens kann eine Vielzahl von halogensubstituierten Verbindungen hydriert werden.

In der Gesamtbilanz setzt man entsprechend Gleichung (3) pro Mol und durch Hydrierung abzuspaltendem Halogenatom mindestens 0,5 Mol Wasserstoff ($H_2$) und 0,33 Mol Aluminium um.

Hydriert werden halogensubstituierte Verbindungen der allgemeinen Formel

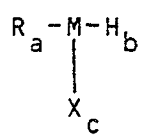

(I) in der

bedeuten: R: Methyl, Phenyl,

X: Chlor, Fluor, insbesondere Chlor,

a+b+c = e, wobei c mindestens 1 und wie e höchstens=4 (bei M:B, ,P,As höchstens 3) und a bzw. b die entsprechende Differenz bilden.

M: B, Si, Ge, P, As, insbesondere Si.

Voraussetzung bei allen Umsetzungen dieser Art ist, daß die Produkte thermisch bei den eingestellten Temperaturen beständig sind und aus der Schmelze gasförmig entweichen.

Es läßt sich auch der Austausch von einem oder mehreren Halogenatomen gegen Wasserstoffatome erzielen, so z.B. bei den Halogensilanen der Reihe $SiHX_3$, $SiH_2X_2$ und $SiH_3X$, insbesondere mit X = Chlor.

Bei Einsatz von $BX_3$ bildet sich $B_2H_6$, während alle anderen Hydride keine Dimeren bilden.

Die Schmelztemperatur liegt im Bereich 130 °C bis 300 °C, bevorzugt 152 °C bis 225 °C.

Innerhalb dieser Bereiche liegen auch die bevorzugten Reaktionstemperaturen für die Hydrierung des Aluminiumpulvers, sowie für die Umsetzung des so erhaltenen Hydrieragens mit der halogensubstituierten Verbindung. Sofern die zu hydrierenden Verbindungen gasförmig vorliegen, werden sie mit einem Trägergas, wie z. B. $H_2$, $N_2$ oder Ar in einem Gemisch von 1 bis 99 Vol% in die Reaktionsschmelze, die das Hydrieragens enthält, eingespült.

Dabei richtet sich die Strömungsbeschwindigkeit nach der Reaktionsgeschwindigkeit.

Die Halogenide können aber auch in flüssiger oder fester Form zugegeben werden.

Das aus der Schmelze austretende Gasgemisch wird nach bekannten Verfahren über Kühlfallen geleitet und das hydrierte Produkt so abgetrennt.

Nicht umgesetzte Verbindungen und Wasserstoff können dann in die Schmelze zurückgeführt werden.

Bei kontinuierlicher Durchführung des Verfahrens wird man die Schritte a) und b) in einem getrennten Behälter vornehmen, das so erhaltene Vorgemisch in den eigentlichen Reaktionskessel einleiten, aus dem man dann entsprechend das sich bei der Reaktion bildende $AlCl_3$, das mit zugesetztemNaCl zu $NaAlCl_4$ reagiert, kontinuierlich abzieht.

Es ist möglich, aus dem abgetrennten $NaAlCl_4$ das Aluminiumpulver durch Schmelzflußelektrolyse zurückzugewinnen (Gleichung (4)) und damit einen zyklischen Prozeß nach der Bruttogleichung (5) durchzuführen:

$$4\ NaAlCl_4 \xrightarrow[200\ ^\circ C]{Elektrolyse} 4\ Al + 4\ NaCl + 6\ Cl_2 \qquad (4)$$

$$3\ SiCl_4 + 6\ H_2 \longrightarrow 3\ SiH_4 + 6\ Cl_2 \qquad (5)$$

Verwendet man bei der Elektrolyse der $NaAlCl_4$-Schmelze eine poröse Kathode, durch die Wasserstoff in die Schmelze gedrückt wird, so kann man das abgeschiedene Aluminium gleich in die komplexe Aluminium-Wasserstoffverbindung überführen, die sich in der Schmelze löst.

## Beispiele

### Beispiel 1

In einem 4 l-Rührreaktor werden 7,8 Mol wasserfreies Aluminiumchlorid und 7,8 Mol Natriumchlorid unter Feuchtigkeitsausschluß eingewogen und bei 200 °C aufgeschmolzen. Zu dieserSalzchmelze werden 1 Mol Aluminiumpulver (Typ ECKA Al-Grieße, Partikelgröße <63 ,um, Fe 0,2 - 0,34 %, Si 0,05 - 0,14 %, Zn 0,01 %, Ti 0,15 - 0,2 %, Rest: Al) zugegeben und unter starkem Rühren suspendiert.

In die gerührte Suspension von Aluminiumpulver in der $NaAlCl_4$-Schmelze wird bei 200 °C und Atmosphärendruck 2 Stunden lang Wasserstoff mit einer Strömungsgeschwindigkeit von rund 30 l/h eingeleitet.

Danach wird bei gleichzeitiger Begasung mit Wasserstoff $SiCl_4$ in die Schmelze eingeleitet. Innerhalb von 1,5 Stunden Reaktionszeit wurden 7,5 g $SiCl_4$ (0,044 Mol) umgesetzt.

Nach Abtrennung des nichtumgesetzten $SiCl_4$ bei-78 °C erhält man bei -196 °C 1,0 g $SiH_4$ (0,031 Mol) (Ausbeute: 70 %)

### Beispiel 2

Unter den gleichen Bedingungen wie in Beispiel 1 wird $(CH_3)_2\ SiCl_2$ in die $NaAlCl_4$-Schmelze, die das Hydrieragens enthält, eingeleitet. Innerhalb von 1,5 Stunden Reaktionszeit werden 16,3 g $(CH_3)_2$ SiCl 2 (0,126 Mol) umgesetzt.

Nach Abtrennung des nichtumgesetzten $(CH_3)_2\ SiCl_2$ bei 0 °C erhält man bei -78 °C 6,4 g $(CH_3)_2\ SiH_2$ - (0,107 Mol) (Ausbeute: 85 %).

### Beispiel 3

Unter den gleichen Bedingungen wie in Beispiel 1 wird $AsCl_3$ in die $NaAlCl_4$-Schmelze, die das Hydrieragens enthält, eingeleitet. Innerhalb von 1,5 Stunden Reaktionszeit werden 21,75 g $AsCl_3$ (0,12 Mol) umgesetzt.

Nach Abtrennung des $AsCl_3$ bei 0 °C erhält man bei -196 °C 4,7 g $AsH_3$ (0,06 Mol) (Ausbeute: 50 %)

## Ansprüche

1 .Verfahren zur Hydrierung halogensubstituierter Verbindungen von Elementen der 2. bis 4. Periode der Gruppen III bis V des Periodensystems mit Ausnahme von Gallium, Aluminium, Kohlenstoff, Stickstoff, dadurch gekennzeichnet, daß man

a) einer Salzschmelze, bestehend aus 50 bis 67 Mol% $AlCl_3$ (wasserfrei) und 50 bis 33 Mol% Natriumchlorid feinteiliges Aluminium zusetzt,

b) in die gerührte oder auf andere Weise dispergierte Suspension Wasserstoff einleitet, um das feinverteilte Aluminium zu hydrieren,

c) anschließend die so entstandene Mischung mit der halogensubstituierten Verbindung umsetzt und

d) die hydrierte Verbindung isoliert.

2. Verfahren gemäß Anspruch 1, dadurch gekennzeichnet, daß man Aluminium einsetzt, welches 0,03 bis 0,25 Gew.-% mindestens eines wasserstoffübertragenden Metalls enthält.

3. Verfahren gemäß Anspruch 2, dadurch gekennzeichnet, daß es sich bei dem Metall um Titan, Zirkon, Hafnium, Vanadin, Niob oder Nickel handelt.

4. Verfahren gemäß Anspruch 1, dadurch gekennzeichnet, daß man der Suspension vor dem Schritt b) 0,1 bis 0,5 Gew.-% eines Hydrids zusetzt, bezogen auf die Menge des Aluminiums.

5. Verfahren gemäß Anspruch 4, dadurch gekennzeichnet, daß man als Hydrid $TiH_2$ NaH oder $LiAlH_4$ verwendet.

6. Verfahren gemäß einem oder mehreren der Ansprüche 1 bis 5, dadurch gekennzeichnet, daß man eine Verbindung der allgemeinen Formel

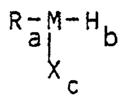

(I)

in der bedeuten: R: Methyl, Phenyl,
X: Chlor, Fluor,
M: B, Si, Ge, P, As,
a+b+c = e, wobei c mindestens 1 und wie e höchstens 4 ist (bei M:B, P, As höchstens 3) und a, b, die entsprechenden Differenzwerte annehmen.

7. Verfahren gemäß einem oder mehreren der Ansprüche 1 bis 6, dadurch gekennzeichnet, daß man eine Verbindung in der M = Si ist, einsetzt.